# EUROPEAN PATENT SPECIFICATION

(11) **EP 0 985 299 B1**
(45) Date of publication and mention of the grant of the patent: **22.09.2004**
(21) Application number: 98924346.4
(22) Date of filing: 02.06.1998
(51) Int. Cl.: H04L 12/50

(54) **METHOD FOR THE SWITCHING OF DATA TRAFFIC IN A DATA COMMUNICATION SYSTEM**
VERFAHREN ZUM VERMITTELN VON DATENVERKEHR IN EINEM DATENÜBERTRAGUNGSSYSTEM
PROCEDE DE COMMUTATION DU TRAFIC DE DONNEES DANS UN SYSTEME DE TRANSMISSION DE DONNEES

(30) Priority: 02.06.1997 FI 972343; 27.06.1997 FI 972799
(43) Date of publication of application: 15.03.2000
(73) Proprietor: Nokia Corporation, 02150 Espoo (FI)
(72) Inventor: HYNYNEN, Paavo, FIN-00550 Helsinki (FI); MUSIOL, Torsten, D-40468 Düsseldorf (DE)
(74) Representative: Simmelvuo, Markku Kalevi
(86) International application number: PCT/FI1998/000477
(87) International publication number: WO 1998/056142

(56) References cited:
- EP-A2- 0 731 618
- EP-A2- 0 734 186
- WO-A1-97/35404
- WO-A2-97/50230

## Description

The present invention relates to a method as defined in the preamble of claim 1 for the switching of data traffic in a data communication system. Moreover, the invention relates to a system as defined in the preamble of claim 9 for the switching of data traffic.

In prior art, there are at least two methods for connecting a subscriber to a local exchange, by connecting the subscriber via a subscriber cable directly to the local exchange or to a subscriber module connected to it, or by connecting the subscriber to the local exchange via an access network.

Open interfaces (V5.1 and V5.2) between an access network, preferably an access node, and a local exchange are defined in the ETSI (European Telecommunications and Standards Institute) standards of the ETS 300 324 and ETS 300 347 series. A V5 interface enables subscribers belonging to a physically separate access network to be connected to a telephone exchange using a standard interface. The V5.2 interface between an access node and a telephone exchange is a concentrated traffic interface. The allocation and/or connection of the transmission path is performed in accordance with the standard by using the BCC protocol. In practice, this works so that the part of the BCC protocol in the local exchange scans and specifies a free time slot in the V5 interface and then transmits an allocation message to the protocol component in the access node. The protocol component in the access node acknowledges receipt of the message.

Connections to narrow-band data networks, especially the Internet, are mainly effected via a telephone network using switched ISDN or PSTN connections (Integrate Services Digital Network; Public Switched Telephone Network). The structure of access networks has been developed by teleoperators on the basis of the so-called zig-zag topology. The capacity of access networks is designed on the basis of an estimated average telephone usage (average call duration, allowed rejection).

Documents WO 97/50230, EP-A-0 734 186, EP-A-0 731 618 disclose switching of data traffic including integrated Internet Access Server as well as V5.2 Interfaces.

The switching of data traffic via the telephone network presents new challenges regarding the use of capacity. When a connection to the Internet is set up via the telephone network using a switched ISDN connection, the duration of the connection and the amount of data transmitted over it differ significantly from a normal voice connection. For this reason, collisions may occur and bottlenecks may be formed in remote concentrator units and local exchanges, hampering the switching of voice and data traffic. A component particularly susceptible to become a bottleneck is the concentrated V5.2 interface between the access node and the local exchange, because its capacity has been defined on the basis of normal telephone traffic.

Based on the V5 standard, a call to the Internet, set up via a switched ISDN or PSTN link, is first connected to the telephone exchange and further from the telephone exchange to a so-called remote access server (RAS) located in a service supplier's station. The remote access server terminates the ISDN/POTS call setup and takes care of checking the rights relating to call setup and carrying out other corresponding operations before connecting the call to the Internet. If many subscribers connected to the access node set up a connection to the remote access server, a likely result is a situation where the V5.2 interface is overloaded. In this case, calls from other subscribers connected to the access node will fail to be set up. Therefore, a solution used to solve this problem is to set up a direct connection from the access node to the remote access server. However, the problem is that such a connection is not supported by the V5 standard, with the result that several independent and mutually incompatible methods for connection setup are used.

The object of the present invention is to eliminate the problems described above.

A specific object of the present invention is to produce a new type of method and system in which data connections from subscribers connected to an access node can be set up without congesting the normal telephone network and telephone service.

A further object of the invention is to produce a simple arrangement for improving the capacity of a telephone network by making use of existing standardised technology, in particular so as to meet the needs of data traffic transmitted over the telephone network.

In the method of the invention for the switching of data traffic in a data communication system, a data connection is set up between a terminal device and a remote access server on the basis of a selection made via the terminal device. In a preferred case, the data communication system is a telephone network comprising a telephone exchange and an access network together with an access node, which is connected to the telephone exchange via a V5 interface. Moreover, connected to the telephone exchange is a remote access server (RAS), which is used to adapt the connection between the telephone network and the data network. Correspondingly, in the system of the invention, a direct data connection is provided from the access node to the remote access server by using the local group switch of the access node.

According to the invention, a data connection is set up directly from the access node to the remote access server (RAS) by using the local group switch of the access node. In practice, this can be implemented by providing the access node with functions for direct connection to the remote access server and for controlling the connection setup from the local exchange using control messages transmitted with a BCC protocol consistent with the V5 recommendations. This makes it possible to connect both ISDN subscribers and POTS subscribers regardless of the signalling used by the subscriber.

As compared with prior art, the invention has the advantage that the procedure of the invention makes it possible to avoid collision and congestion situations caused by data traffic to a data network, such as the Internet.

Furthermore, the invention allows more effective utilization of the capacity of the remote access servers connected to the telephone network and of other equipment needed for setting up a connection to a data network. The invention makes the process of connecting a subscriber from the access network to a data network simpler both in respect of control of the telephone network and in respect of the physical arrangements regarding equipment.

In an embodiment of the method of the invention, a request from a terminal device, preferably a modem connected to a computer, for setting up a data connection is processed or analyzed and, when it is discovered that a data connection from the terminal device via a remote access server to a data network is to be set up, then the group switch of the access node is instructed to connect the terminal device directly to the remote access server and further to the data network. The data connection setup request is analyzed in the telephone exchange by using its normal analyzing tools.

In a preferred embodiment of the present invention, the remote access server or the functions it requires are placed in the access node. In this case, the interface between the remote access server and the access node can be more easily implemented than in the conventional system.

In the following, the invention is described by the aid of preferred embodiments by referring to the attached drawing, in which
Fig. 1 is a diagram representing a prior-art telephone network;
Fig. 2 is a diagram representing a telephone network according to the invention;
Fig. 3 is a diagram representing another telephone network according to the invention;
Fig. 4 represents a preferred signalling arrangement in a telephone network as presented in Fig. 2 or 3.

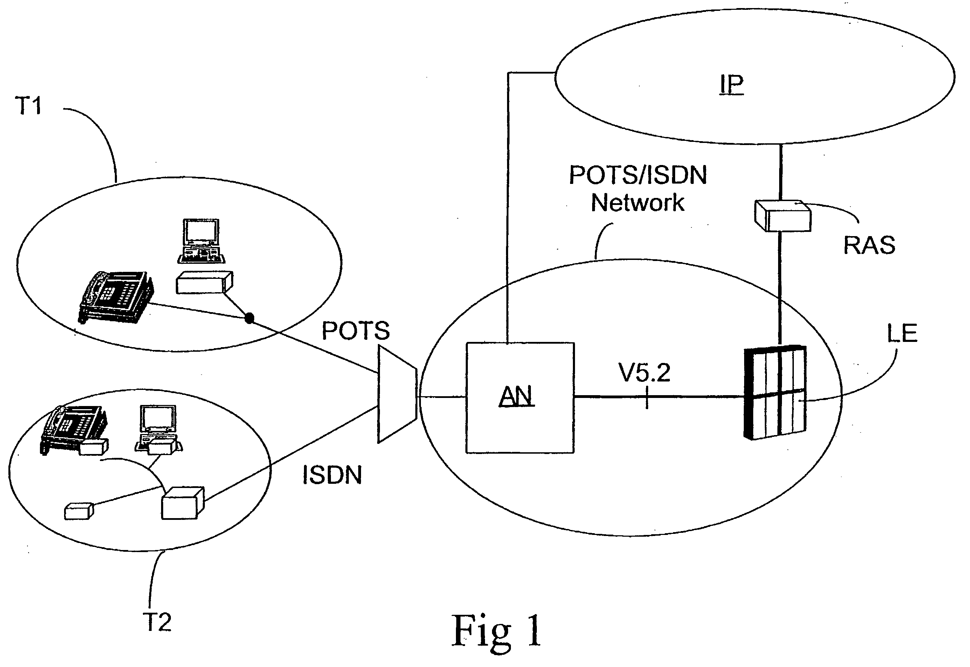

The telephone network presented in Fig. 1 comprises a local exchange LE and an access node AN connected to it via a V5.2 interface. Connected to the access node AN are two terminal devices T1 and T2. The first terminal device T1 is connected to a subscriber line (POTS; Plain Old Telephone System) supporting conventional telephony and it may consist of a computer and an ordinary modem connected to it. The second terminal device T2 is connected to a subscriber line supporting ISDN technology and it may also consist of a computer and an ISDN-TA adapter connected to it. Also, an ISDN router may be connected to the ISDN line to connect the local network or equivalent via the telephone network to another data network. In some applications, a data connection can be set up directly from the access node AN to a remote access server RAS.

In prior art, calls to be connected from the first and second terminal devices to a data network, such as the Internet IP, have been set up via the access node AN and the local exchange LE. The connection between the telephone network ISDN, POTS and the data network IP has been adapted by means of a remote access server RAS. In addition, the remote access server may have contained functions relating to billing and the identification of the subscriber requesting call setup. Data traffic, considerably heavier than telephone traffic, has caused congestion of the V5.2 interface between the access node AN and the local exchange LE.

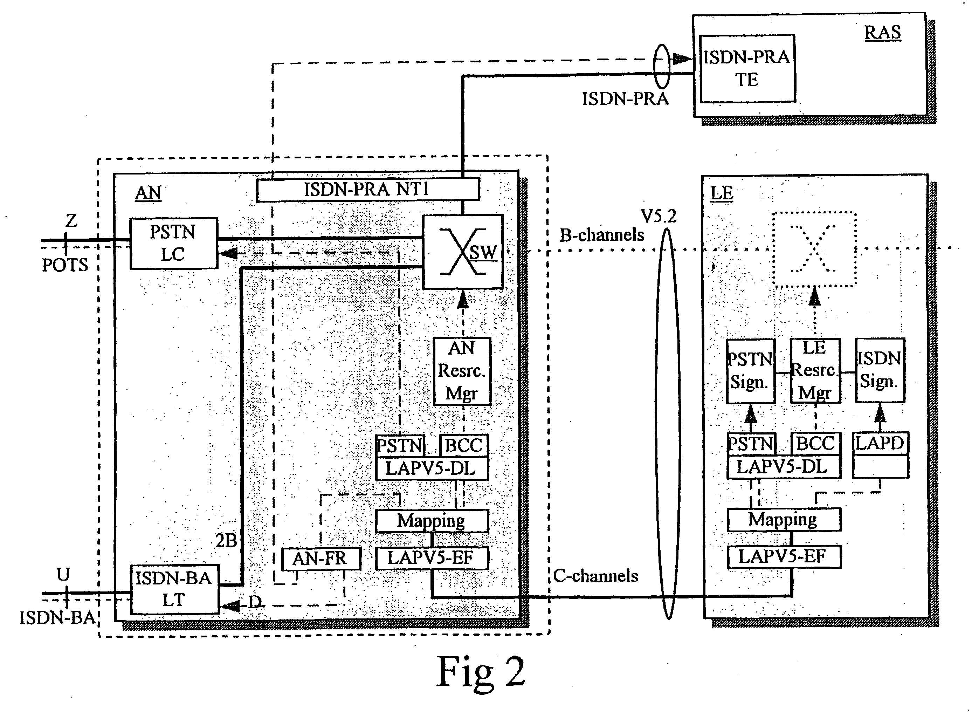

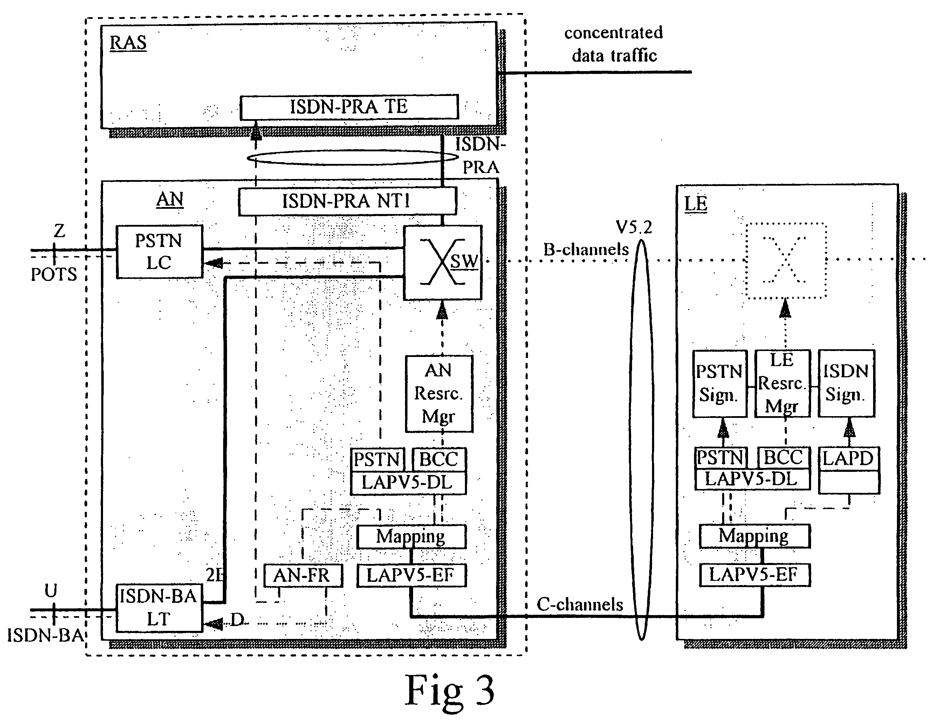

Referring to Fig. 2 and 3, comments are now presented concerning components in the access node AN and local exchange LE that are essential to the invention and are shown in the figures. The access node comprises a group switch SW and subscriber lines PSTN LC and ISDN-BA LT connected to it. There may be more subscriber lines connected to the access node than those presented in the figure. The group switch SW is controlled by a resource manager AN Resrc Mgr comprised in the access node. Connected to the resource manager are the protocol objects PSTN, BCC controlling the entire V5.2 interface. The ISDN signalling to be transmitted over the V5.2 interface is only packed in "envelopes" (envelope function) and transmitted in envelopes over the interface, to be unpacked in the local exchange; thus, the actual call control in ISDN connections is effected by the local exchange in accordance with the ISDN protocol. The V5.2 interface signalling is adapted by an adapting function, Mapping, to make it correspond to the other types of signalling (PSTN) used in the telephone network. Correspondingly, the local exchange contains the same functions and protocol objects as the access node. Let it be further noted that the analyzing tools 1 and the tools 2 used to control the group switch are formed by means of the objects and functions described above.

It is further pointed out that structural blocks presented in Fig. 2 and 3 that are not mentioned here are consistent with the normal V5 standard; as for these blocks, reference is made to said standard.

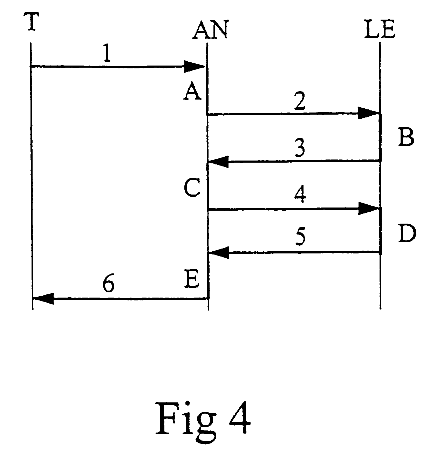

The diagram in Fig. 2 represents a solution according to the invention that allows congestion of the V5.2 interface to be avoided. In this solution, a data connection is set up using a separate link ISDN-PRA between the access node and the remote access server. The ISDN-PRA link may be e.g. an ISDN system line. An example of practical signalling will be presented later on, referring to Fig. 4.

Fig. 3 presents a solution substantially conforming with the one shown in Fig. 2, but in this case the functionality of the remote access server RAS is connected directly to the access node AN. The remote access server RAS is further connected to a data network using a concentrated IP traffic connection. A concentrated connection allows more effective utilization of the capacity of a link set up from the access node to a data network.

Referring to Fig. 4, an example of the signalling between the access node AN and the local exchange. In this example, the setup of a data connection is controlled in the local exchange in the manner defined by the standard, with the difference that the data connection is set up by connecting directly from the access node to the remote access server RAS, which is a separate device or a part of the access node.

The terminal device T1, T2 starts call setup using normal signalling. An initialization signal 1 is sent to the access node AN, which transmits the signal 2 transparently to the local exchange LE according to the V5 recommendations using either the PSTN control protocol (POTS line) or the frame transmission and envelope function (ISDN line). The local exchange receives the call setup request and detects that the terminal device T1, T2 wants to set up a connection to a data network. Here, intelligent system components of the local exchange are used. The local exchange keeps a record of the status of the interface between the access node AN and the remote access server RAS, and if a free time slot is found, then the local exchange, using the V5.2 interface BCC protocol, sends to the access node an instruction 3 to connect the subscriber to that time slot and registers the time slot as being busy. Depending on the application, the local exchange LE informs a billing system about the call setup. Finally, the local exchange sends a signal 5, 6 to the terminal device T1, T2 to indicate connection, and if no free time slot was available, then the local exchange sends a busy signal 5, 6 to the terminal device.

The setdown of a data connection mainly comprises the same operations and signalling as the setup. The terminal device T1, T2 is disconnected from the time slot and the billing system is informed about the setdown of the connection.

The invention is not restricted to the examples of its embodiments described above, but many variations are possible within the framework of the inventive idea defined by the claims.

## Claims

1. Method for the switching of data traffic in a data communication system comprising a telephone exchange (LE), an access node (AN) connected to the telephone exchange via a standard V5 interface, a remote access server (RAS) connected to the telephone network and to a data network to adapt a data connection between the telephone network and the data network, and a terminal device (T) connected to the access node, in which procedure a data connection is set up between the terminal device and the remote access server by connecting the data connection directly from the access node to the remote access server (RAS), **characterised in that** the data connection is set up directly from the access node to the remote access server (RAS) by using the local group switch of the access node.

2. Method as defined in claim 1, **characterised in that** a request from a terminal device for setting up a voice and/or data call is analyzed and, if it is discovered that the terminal device is setting up a data connection to the remote access server, then the group switch of the access node is instructed to set up the data connection using the link between the access node (AN) and the remote access server (RAS)

3. Method as defined in claim 1 or 2, **characterised in that** the request for setting up a data connection is analyzed in the local exchange (LE).

4. Method as defined in claim 3, **characterised in that** the instruction to set up a data connection is given from the local exchange using a normal V5 interface signalling protocol, such as the BCC protocol.

5. Data communication system for the switching of data traffic, said system comprising a telephone exchange (LE), an access node (AN) connected to the telephone exchange via a standard V5 interface, a remote access server (RAS) connected to the telephone network to adapt a data connection between the telephone network and a data network, and a terminal device (T) connected to the access node, in which system a data connection is set up between the terminal device and the remote access server using a direct data connection between the access node and the remote access server, **characterised in that** a direct data connection from the access node to the remote access server (RAS) is provided by using the local group switch of the access node.

6. System as defined in claim 5, **characterised in that** the system comprises analyzing tools (1) for analyzing a voice and/or data call setup request and tools (2) for controlling the group switch of the access node so as to connect a data call directly to the remote access server (RAS).

7. System as defined in claim 5 or 6, **characterised in that** the analyzing tools (1) are disposed in the local exchange (LE).

8. System as defined in any one of the preceding claims 5 - 7, **characterised in that** the remote access server (RAS) or the functions required by it are disposed in the access node.

## Patentansprüche

1. Verfahren zum Vermitteln von Datenverkehr in einem Daten-Kommunikationssystem mit einer Telefonvermittlung (**LE**), einem über eine Standard-V5-Schnittstelle mit der Telefonvermittlung verbundenen Zugangsknoten (**AN**), einem zur Anpassung einer Datenverbindung zwischen dem Telefonnetzwerk und einem Datennetzwerk mit dem Telefonnetzwerk und dem Datennetzwerk verbundenen Fern-Zugangsserver (**RAS**), und einer mit dem Zugangsknoten verbundenen Endgerätvorrichtung (**T**), wobei bei dem Verfahren eine Datenverbindung zwischen der Endgerätvorrichtung und dem Fern-Zugangsserver durch direktes Verbinden der Datenverbindung von dem Zugangsknoten zum Fern-Zugangsserver (**RAS**) aufgebaut wird,
**dadurch gekennzeichnet, dass**
die Datenverbindung direkt von dem Zugangsknoten zum Fern-Zugangsserver (**RAS**) durch Verwenden des Lokal-Gruppenschalters des Zugangsknotens aufgebaut wird.

2. Verfahren gemäß Anspruch 1, **dadurch gekennzeichnet, dass** eine Aufforderung von einer Endgerätvorrichtung zum Aufbauen eines Sprach- und/oder Datenrufs analysiert wird, und, falls festgestellt wird, dass die Endgerätvorrichtung eine Datenverbindung zum Fern-Zugangsserver aufbaut, der Gruppenschalter des Zugangsknotens angewiesen wird, die Datenverbindung unter Verwendung der Verbindung zwischen dem Zugangsknoten (**AN**) und dem Fern-Zugangsserver (**RAS**) aufzubauen.

3. Verfahren gemäß Anspruch 1 oder 2, **dadurch gekennzeichnet, dass** die Aufforderung zum Aufbau einer Datenverbindung in der Ortsvermittlung (**LE**) analysiert wird.

4. Verfahren gemäß Anspruch 3, **dadurch gekennzeichnet, dass** die Anweisung zum Aufbau einer Datenverbindung von der Ortsvermittlung unter Verwendung eines normalen V5-Schnittstellensignalisierungsprotokolls, wie beispielsweise des BCC-Protokolls, gegeben wird.

5. Daten-Kommunikationssystem zum Vermitteln von Datenverkehr, wobei das System eine Telefonvermittlung (**LE**), einen über eine Standard-V5-Schnittstelle mit der Telefonvermittlung verbundenen Zugangsknoten (**AN**), einen zur Anpassung einer Datenverbindung zwischen dem Telefonnetzwerk und einem Datennetzwerk mit dem Telefonnetzwerk verbundenen Fern-Zugangsserver (**RAS**), und eine mit dem Zugangsknoten verbundene Endgerätvorrichtung (**T**) aufweist, wobei in dem System eine Datenverbindung zwischen der Endgerätvorrichtung und dem Fern-Zugangsserver unter Verwendung einer Direkt-Datenverbindung zwischen dem Zugangsknoten und dem Fern-Zugangsserver aufgebaut wird,
**dadurch gekennzeichnet, dass**
eine Direkt-Datenverbindung von dem Zugangsknoten zum Fern-Zugangsserver (**RAS**) durch Verwenden des Lokal-Gruppenschalters des Zugangsknotens bereitgestellt ist.

6. System gemäß Anspruch 5, **dadurch gekennzeichnet, dass** das System eine Analyseeinrichtung (**1**) zur Analyse einer Sprach- und/oder Daten-Rufaufbau-Aufforderung und eine Einrichtung (2) zur Steuerung des Gruppenschalters des Zugangsknotens aufweist, um einen Datenruf direkt mit dem Fern-Zugangsserver (**RAS**) zu verbinden.

7. System gemäß Anspruch 5 oder 6, **dadurch gekennzeichnet, dass** die Analyseeinrichtung (**1**) in der Ortsvermittlung (**LE**) angeordnet ist.

8. System gemäß einem der vorangehenden Ansprüche 5 bis 7, **dadurch gekennzeichnet, dass** der Fern-Zugangsserver (**RAS**) oder die durch ihn benötigten Funktionen in dem Zugangsknoten angeordnet sind.

## Revendications

1. Procédé de commutation du trafic de données dans un système de transmission de données comprenant un central téléphonique (LE), un noeud d'accès (AN) relié au central téléphonique via une interface V5 classique, un serveur d'accès à distance (serveur RAS) relié au central téléphonique et à un réseau de données en vue de l'adaptation d'une connexion de données entre le réseau téléphonique et le réseau de données, ainsi qu'un dispositif de terminal (T) relié au noeud d'accès, dans lequel une connexion de données est établie entre le dispositif de terminal et le serveur d'accès à distance en connectant la connexion de données directement à partir du noeud d'accès vers le serveur d'accès à distance (serveur RAS), **caractérisé en ce que** la connexion de données est établie directement à partir du noeud d'accès vers le serveur d'accès à distance (serveur RAS) en utilisant le commutateur de groupe local du noeud d'accès.

2. Procédé selon la revendication 1, **caractérisé en ce qu'**une demande d'établissement de communication vocale et/ou en mode données émanant d'un dispositif de terminal est analysée et, si le dispositif de terminal est sur le point d'établir une connexion de données vers le serveur d'accès à distance, le commutateur de groupe du noeud d'accès reçoit pour instruction d'établir la connexion de données en utilisant le lien entre le noeud d'accès (AN) et le serveur d'accès à distance (serveur RAS).

3. Procédé selon la revendication 1 ou 2, **caractérisé en ce que** la demande d'établissement d'une connexion de données est analysée par le central téléphonique (LE).

4. Procédé selon la revendication 3, **caractérisé en ce que** l'instruction d'établissement d'une connexion de données émane du central téléphonique en utilisant un protocole de signalisation par interface V5 classique, tel que le protocole BCC.

5. Système de transmission de données destiné à la commutation du trafic de données, ledit système comprenant un central téléphonique (LE), un noeud d'accès (AN) relié au central téléphonique via une interface V5 classique, un serveur d'accès à distance (serveur RAS) relié au central téléphonique et à un réseau de transmission de données en vue de l'adaptation d'une connexion de données entre le réseau téléphonique et le réseau de transmission de données, ainsi qu'un dispositif de terminal (T) relié au noeud d'accès, dans lequel une connexion de données est établie entre le dispositif de terminal et le serveur d'accès à distance en utilisant une connexion directe de données entre le noeud d'accès et le serveur d'accès à distance, **caractérisé en ce qu'**une connexion de données est établie directement à partir du noeud d'accès vers le serveur d'accès à distance (serveur RAS) en utilisant le commutateur de groupe local du noeud d'accès.

6. Système selon la revendication 5, **caractérisé en ce que** le système comprend des outils d'analyse (1) pour analyser une demande d'établissement d'une communication vocale et/ou en mode données ainsi que des outils (2) pour contrôler le commutateur de groupe du noeud d'accès de façon à connecter une communication de données directement au serveur d'accès à distance (serveur RAS).

7. Système selon la revendication 5 ou 6, **caractérisé en ce que** les outils d'analyse (1) sont intégrés au central téléphonique (LE).

8. Système selon l'une quelconque des revendications précédentes 5 - 7, **caractérisé en ce que** le serveur d'accès à distance (serveur RAS) ou les fonctions dudit serveur sont intégrés au noeud d'accès.
